# EUROPEAN PATENT SPECIFICATION

(11) **EP 4 209 825 B1**
(45) Date of publication and mention of the grant of the patent: **18.12.2024**
(21) Application number: 22186959.7
(22) Date of filing: 26.07.2022
(51) Int. Cl.: G02B 27/00, G02B 7/02

(54) **DEFROSTING LENS**
ABTAULINSE
LENTILLE DE DÉGIVRAGE

(30) Priority: 11.01.2022 TW 111101066
(43) Date of publication of application: 12.07.2023
(73) Proprietor: Calin Technology Co., Ltd., Taichung City 427 (TW)
(72) Inventor: HSIAO, Chih-Yung, 406 Taichung City (TW); LEE, Shu-Ming, 411 Taichung City (TW); TSAI, Meng-Chien, 406 Taichung City (TW); LIN, Hong-Yen, 427 Taichung City (TW); LI, Cyuan-Cong, 434 Taichung City (TW); TSENG, Chi-Jui, 406 Taichung City (TW); CHENG, Yi-Hsung, 412 Taichung City (TW)
(74) Representative: Viering, Jentschura & Partner mbB Patent- und Rechtsanwälte

(56) References cited:
- WO-A1-2022/002681
- CN-A- 113 608 398
- CN-A- 113 905 472
- DE-A1- 102020 200 695
- US-A1- 2018 176 431
- US-A1- 2021 199 953

## Description

### BACKGROUND OF THE INVENTION

### Technical Field

The present invention generally relates to a defrosting lens, and more particularly to a defrosting lens, which could heat lens.

### Description of Related Art

Conventional camera lenses have been widely used in fields such as vehicle camera modules, access control monitoring systems, and field monitoring systems. However, when a camera lens is used in a cold environment, frost is easily formed on the lens due to the low temperature, which causes part of the lens field of view to be blocked by frost, so that the camera lens cannot capture a clear image through the lens.

Additionally, with advantages in vehicle technology in recent years, vehicle camera modules are also widely used in devices such as automatic driving monitoring devices, driving recorders, and reversing camera devices. When the lens frosting problem occurs in the lens of the vehicle camera module, it may cause the driving or automatic driving system to misjudge the environment or road conditions, and cause serious harm to the user's driving safety. Therefore, how to provide a camera lens that could improve the frosting phenomenon of the lens has become a major issue in the industry.

Some defrosting lenses in the prior art are disclosed in US 20180176431 A1, WO 2022002681 A1, CN 113905472 A, DE 102020200695 A1, US 20210199953 A1 and CN 113608398 A.

### BRIEF SUMMARY OF THE INVENTION

According to the present invention, a defrosting lens according to claim 1 is provided. Preferred embodiments are further defined in the dependent claims.

In view of the reasons mentioned above, the primary objective of the present invention is to provide a defrosting lens that could improve a problem of frosting on the lens 1 of a camera lens.

The present invention provides a defrosting lens, including a lens barrel, a first lens, and a heating member, wherein the lens barrel has an opening toward an object side. The first lens is disposed in the lens barrel and is located at the opening. The heating member is adapted to provide a heat source and is disposed between an inner wall of the lens barrel and the first lens, wherein the heating member is arranged along a peripheral edge of the first lens.

With the aforementioned design, since the first lens located at the opening is the most likely to get frost due to low temperature, by providing the heating member on the peripheral edge of the first lens, the thermal energy generated by the heating member could raise the temperature of the first lens to remove the frost formed on the first lens. Additionally, the setting position of the heating member could facilitate the temperature of the whole first lens to be kept within a predetermined temperature difference range, without affecting a field of view of the defrosting lens. In this way, a definition of an image captured by the defrosting lens could be effectively improved, so that the defrosting lens could be applied in various environments without being limited by the change of climate temperature difference.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a schematic view of the defrosting lens according to an embodiment of the present invention;
FIG. 2 is a schematic view of the defrosting lens according to an example not forming part of the present invention but useful for understanding the present invention; and
FIG. 3 is a schematic view of the defrosting lens according to still an example not forming part of the present invention but useful for understanding the present invention.

### DETAILED DESCRIPTION OF THE INVENTION

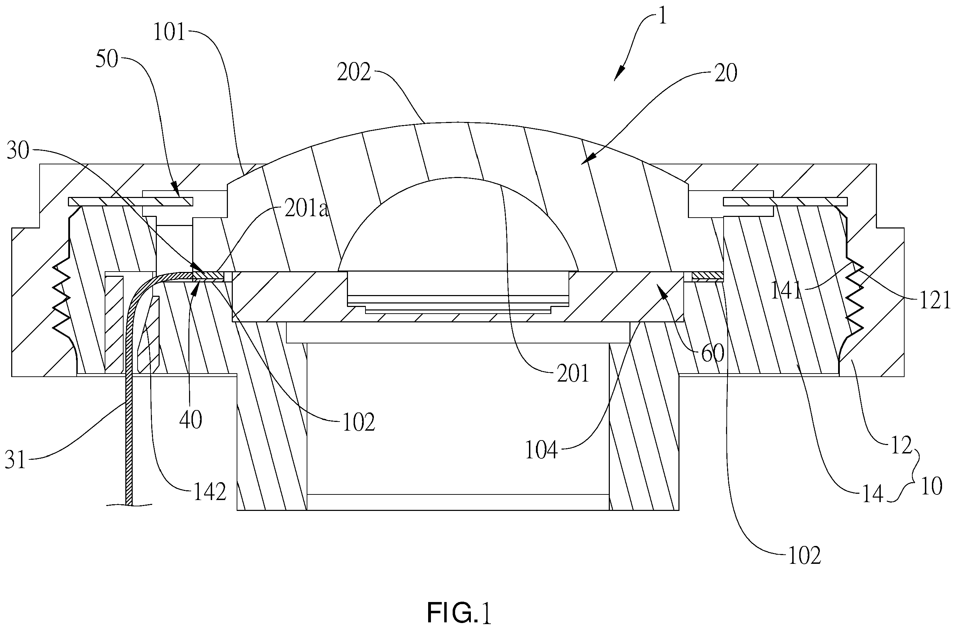

A defrosting lens 1 according to an embodiment of the present invention is illustrated in FIG. 1, which is applied to a vehicle camera and includes a lens barrel 10, a first lens 20, and a heating member 30.

The lens barrel 10 has an opening 101 toward an object side of the defrosting lens 1. The first lens 20 is disposed in the lens barrel 10 and is located at the opening 101 (i.e., the first lens 20 is disposed in the lens barrel 10 and is located closest to an outside, wherein the first lens 20 could be a convex lens, a concave lens, a filter, a spherical lens, an aspheric lens, a wide-angle lens, or a combination of the foregoing.

The heating member 30 is adapted to provide a heat source and is disposed between an inner wall of the lens barrel 10 and the first lens 20, wherein the heating member 30 is arranged along a peripheral edge of the first lens 20. The heating member 30 could be an electro-thermal heater, wherein the electro-thermal heater includes a substrate and an electro-thermal unit. The substrate could be a flexible insulating film. The electro-thermal unit is disposed on the substrate. The substrate could be selected from materials such as polyester film, polyimide (PI) film, polyethylene terephthalate (PET) film, polyvinyl chloride (PVC) film, or silicone rubber. The electro-thermal unit could be connected to an external power source through a conductive line, and then generate thermal energy by an electrothermal effect through an impedance loop of the electro-thermal unit. Preferably, the electro-thermal heater includes a thermistor chip or a temperature sensor chip, etc.

In the current embodiment, a film thickness of the heating member 30 ranges between 0.1 and 0.3mm; a maximum heating temperature of the heating member 30 could preferably reach 78 degrees Celsius, and the heating member 30 could be controlled to reach a predetermined heating temperature at a predetermined time. In this way, a temperature of the first lens 20 could be increased through the heat source supplied by the heating member 30, which could effectively remove frost formed on the first lens 20. Additionally, the setting position of the heating member 30 could facilitate the temperature of the entire first lens 20 to be kept within a predetermined temperature difference range, without affecting a field of view of the defrosting lens 1.

The inner wall of the lens barrel 10 has an abutting surface 102 that is annular. An image-side surface 201 of the first lens 20 has an abutting portion 201a. The heating member 30 is dispsoed between the abutting surface 102 and the abutting portion 201a. The lens barrel 10 includes a first lens barrel 12 and a second lens barrel 14, wherein the first lens barrel 12 has the opening 101, and the second lens barrel 14 has the abutting surface 102. An inner wall of the first lens barrel 12 has an internal threaded section 121, and an outer wall of an end of the second lens barrel 14 has an external threaded section 141 matching with the internal threaded section 121, wherein the end of the second lens barrel 14 is disposed in the first lens barrel 12 by screwing the external threaded section 141 with the internal threaded section of the first lens barrel 12. The first lens 20 is disposed between the opening 101 of the first lens barrel 12 and the abutting surface 102 of the second lens barrel 14. In this way, when the end of the second lens barrel 14 is disposed in the first lens barrel 12 by screwing the external threaded section 141 with the internal threaded section of the first lens barrel 12, the heating member 30 could be disposed between the abutting surface 102 of the second lens barrel 14 and the abutting portion 201a of the first lens 20, thereby enhancing a heating efficiency that the heating member 30 heats the first lens 20. The second lens barrel 14 has a wire hole 142 for being passed through by a conducting wire 31, wherein the wire hole 142 communicates with an inside of the second lens barrel 14 and an outside. An inner opening of the wire hole 142 in the second lens barrel 14 is located at an outer edge of the abutting surface 102, and a diameter of the wire hole 142 gradually decreases from the inner opening of the wire hole 142 in the second lens barrel 14 to an outside of the second lens barrel 14.

In the current embodiment, the defrosting lens 1 includes a thermal insulating member 40 that could be made of a material with a lower thermal conductivity, wherein the thermal insulating member 40 is disposed in the lens barrel 10. The heating member 30 is disposed between the thermal insulating member 40 and the first lens 20, wherein a side of the heating member 30 is attached to the thermal insulating member 40, and another side of the heating member 30 is in contact with the first lens 20. With the thermal insulating member 40, the thermal energy generated by the heating member 30 could be prevented from escaping to a direction away from the first lens 20, thereby improving the heating efficiency that the heating member 30 heats the first lens 20. Additionally, the thermal insulating member 40 could also block the thermal energy generated by the heating member 30 from being transferred to the abutting surface 102 of the second lens barrel 14, which may cause damage or deterioration of the second lens barrel 14.

In the invention, the defrosting lens 1 includes a thermoconductive member 50 that could be made of a material with a higher thermal conductivity. The thermoconductive member 50 is disposed in the lens barrel 10 and surrounds the first lens 20, wherein the thermoconductive member 50 is located closer to an object-side surface 202 of the first lens 20 than the heating member 30, and the heating member 30 is located closer to the image-side surface 201 of the first lens 20 than the thermoconductive member 50. In this way, the thermal energy generated by the heating member 30 could be quickly transmitted to the object-side surface 202 of the first lens 20 through the conduction of the thermoconductive member 50, thereby achieving the purpose of warming up the whole first lens 20.

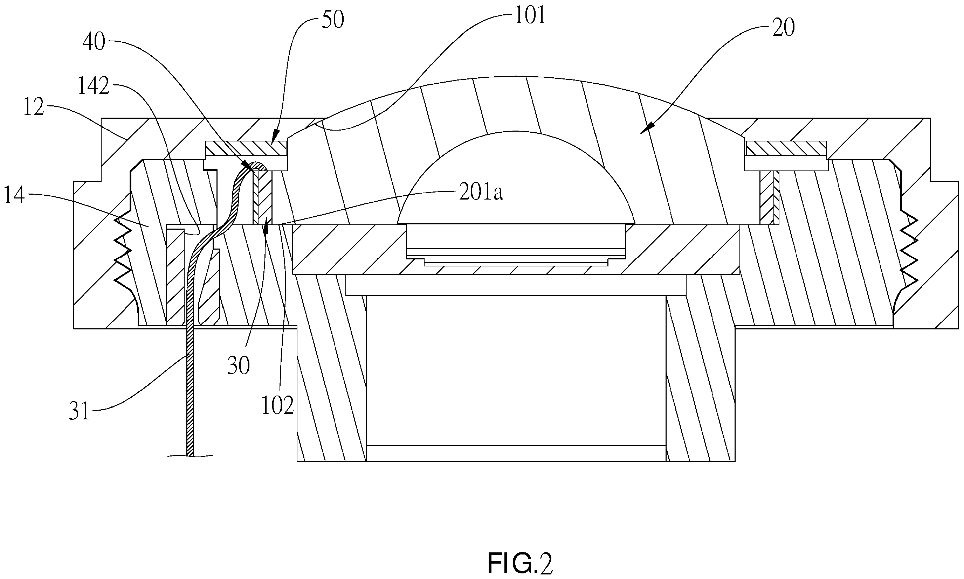

In the current embodiment, the second lens barrel 14 is made of metal. The thermoconductive member 50 is disposed between an inner wall of the first lens barrel 12 close to the opening and an end opening of the second lens barrel 14, and the thermoconductive member 50 is in contact with the first lens barrel 12 and the second lens barrel 14. In this way, the thermal energy generated by the heating member 30 could be quickly transmitted to the thermoconductive member 50 through the second lens barrel 14 and then be transmitted to the first lens 20 through the thermoconductive member 50. In the current embodiment, the thermoconductive member 50 is disposed in a way surrounding an outer periphery of the first lens 20. In other embodiments, the thermoconductive member 50 could be disposed in a way surrounding an outer periphery of the first lens 20 and in contact with the outer periphery of the first lens 20, as shown in FIG. 2, thereby further improving the heating efficiency that the heating member 30 heats the first lens 20.

In the embodiment shown in FIG. 1, the defrosting lens 1 includes a second lens 60, wherein an inner wall of the second lens barrel 14 has a lens abutting surface 104 that is annular. The lens abutting surface 104 and the abutting surface 102 are arranged in order along an axial direction of the second lens barrel 14 toward the opening 101 of the first lens barrel 12. A peripheral edge of an image-side surface of the second lens 60 abuts against the lens abutting surface 104. In the current embodiment, the heating member 30 is not in contact with the second lens 60.

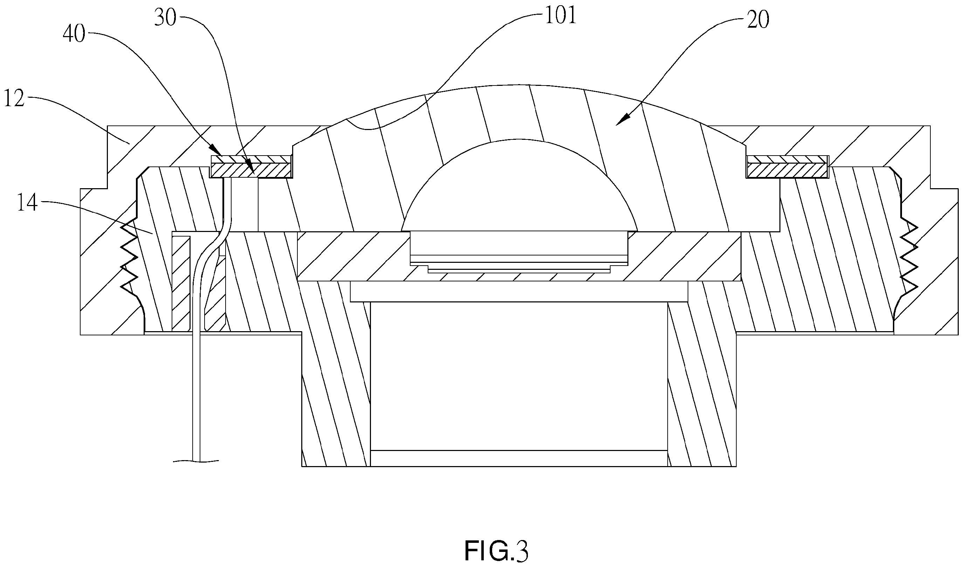

In the current embodiment, the heating member 30 is disposed between the abutting surface 102 of the second lens barrel 14 and the abutting portion 201a of the first lens 20. In practice, the heating member 30 could be disposed in a way surrounding the peripheral edge of the first lens 20. For instance, a side of the heating member 30 is attached to a side edge of the first lens 20, and another side of the heating member 30 is attached to the thermal insulating member 40, as shown in FIG. 2; alternatively, the heating member 30 is disposed on an inner wall of the first lens barrel 12 and is located on a peripheral edge of the opening 101, and the thermal insulating member 40 is disposed between the inner wall of the first lens barrel 12 and the heating member 30, as shown in FIG. 3, which could achieve the purpose of raising the temperature of the first lens 20 as well.

With the aforementioned design, by disposing the heating member 30 on the peripheral edge of the first lens 20, the thermal energy generated by the heating member 30 could raise the temperature of the first lens 20 to remove the frost formed on the first lens 20. Additionally, the setting position of the heating member 30 could facilitate the temperature of the whole first lens 20 to be kept within a predetermined temperature difference range, without affecting a field of view of the defrosting lens 1. In this way, a definition of an image captured by the defrosting lens 1 could be effectively improved, so that the defrosting lens 1 could be applied in various environments without being limited by the change of climate temperature difference.

## Claims

1. A defrosting lens (1), comprising:
a lens barrel (10) having an opening (101) toward an object side, wherein an inner wall of the lens barrel (10) has an abutting surface (102) that is annular; the lens barrel (10) comprises a first lens barrel (12) and a second lens barrel (14); the first lens barrel (12) has the opening (101); the second lens barrel (14) has the abutting surface (102); an end of the second lens barrel (14) is disposed in the first lens barrel (12);
a first lens (20) disposed in the lens barrel (10) and located at the opening (101), wherein the first lens (20) is disposed between the opening (101) of the first lens barrel (12) and the abutting surface (102) of the second lens barrel (14); an image-side surface (201) of the first lens (20) has an abutting portion (201a); and
a heating member (30) adapted to provide a heat source and disposed between the abutting surface (102) of the lens barrel (10) and the abutting portion (201a) of the first lens (20), wherein the heating member (30) is arranged along a peripheral edge of the first lens (20); and
a thermoconductive member (50) disposed in the lens barrel (10) and surrounding the first lens (20) and disposed between an inner wall of the first lens barrel (12) close to the opening (101) and an end opening of the second lens barrel (14).

2. The defrosting lens (1) as claimed in claim 1, further comprising a thermal insulating member (40) disposed in the lens barrel (10), wherein the heating member (30) is located between the thermal insulating member (40) and the first lens (20).

3. The defrosting lens (1) as claimed in claim 1, wherein the inner wall of the first lens barrel (12) has an internal threaded section (121), and an outer wall of the second lens barrel (14) has an external threaded section (141) matching with the internal threaded section (121); the end of the second lens barrel (14) is disposed in the first lens barrel (12) by screwing the external threaded section (141) and the internal threaded section (121) of the first lens barrel (12).

4. The defrosting lens (1) as claimed in claim 1, wherein the thermoconductive member (50) is located closer to an object-side surface of the first lens (20) than the heating member (30), and the heating member (30) is located closer to the image-side surface of the first lens (20) than the thermoconductive member (50).

5. The defrosting lens (1) as claimed in claim 4, wherein the thermoconductive member (50) is in contact with the second lens barrel (14).

6. The defrosting lens (1) as claimed in claim 1, wherein the second lens barrel (14) has a wire hole (142) communicating with an inside of the second lens barrel (14) and an outside; an inner opening of the wire hole (142) in the second lens barrel (14) is located at an outer edge of the abutting surface (102).

7. The defrosting lens (1) as claimed in claims 1, further comprising a second lens (60), wherein an inner wall of the second lens barrel (14) has a lens abutting surface (104) that is annular, wherein the lens abutting surface (104) and the abutting surface (102) are arranged in order along an axial direction of the second lens barrel (14) toward the opening (101) of the first lens barrel (12); a peripheral edge of an image-side surface of the second lens (60) abuts against the lens abutting surface (104).

## Patentansprüche

1. Entfrostungslinse (1), welche aufweist:
einen Linsentubus (10), welcher eine Öffnung (101) zu einer Objektseite hin aufweist, wobei eine Innenwand des Linsentubus (10) eine ringförmige Anliegefläche (102) hat; wobei der Linsentubus (10) einen ersten Linsentubus (12) und einen zweiten Linsentubus (14) aufweist; wobei der erste Linsentubus (12) die Öffnung (101) hat; wobei der zweite Linsentubus (14) die Anliegefläche (102) hat; wobei ein Ende des zweiten Linsentubus (14) in dem ersten Linsentubus (12) angeordnet ist;
eine erste Linse (20), welche in dem Linsentubus (10) angeordnet ist und sich an der Öffnung (101) befindet, wobei die erste Linse (20) zwischen der Öffnung (101) des ersten Linsentubus (12) und der Anliegefläche (102) des zweiten Linsentubus (14) angeordnet ist; wobei eine bildseitige Fläche (201) der ersten Linse (20) einen Anliegeabschnitt (201a) hat; und
ein Heizelement (30), welches angepasst ist, um eine Wärmequelle bereitzustellen, und das zwischen der Anliegefläche (102) des Linsentubus (10) und dem Anliegeabschnitt (201a) der ersten Linse (20) angeordnet ist, wobei das Heizelement (30) entlang einem Umfangsrand der ersten Linse (20) angeordnet ist; und
ein wärmeleitfähiges Element (50), welches in dem Linsentubus (10) angeordnet ist und die erste Linse (20) umgibt und zwischen einer Innenwand des ersten Linsentubus (12) nahe der Öffnung (101) und einer Endöffnung des zweiten Linsentubus (14) angeordnet ist.

2. Entfrostungslinse (1) nach Anspruch 1, welche ferner ein thermisch-isolierendes Element (40) aufweist, welches in dem Linsentubus (10) angeordnet ist, wobei sich das Heizelement (30) zwischen dem thermisch-isolierenden Element (40) und der ersten Linse (20) befindet.

3. Entfrostungslinse (1) nach Anspruch 1, wobei die Innenwand des ersten Linsentubus (12) einen Innengewindeabschnitt (121) hat, und eine Außenwand des zweiten Linsentubus (14) einen Außengewindeabschnitt (141) hat, der mit dem Innengewindeabschnitt (121) zusammenpasst; wobei das Ende des zweiten Linsentubus (14) in dem ersten Linsentubus (12) durch Verschrauben des Außengewindeabschnitts (141) und des Innengewindeabschnitts (121) des ersten Linsentubus (12) angeordnet ist.

4. Entfrostungslinse (1) nach Anspruch 1, wobei sich das wärmeleitfähige Element (50) näher an einer objektseitigen Fläche der ersten Linse (20) befindet als das Heizelement (30), und sich das Heizelement (30) näher an der bildseitigen Fläche der ersten Linse (20) befindet als das wärmeleitfähige Element (50).

5. Entfrostungslinse (1) nach Anspruch 4, wobei das wärmeleitfähige Element (50) in Kontakt mit dem zweiten Linsentubus (14) ist.

6. Entfrostungslinse (1) nach Anspruch 1, wobei der zweite Linsentubus (14) ein Drahtloch (142) hat, welches mit einem Inneren des zweiten Linsentubus (14) und einem Äußeren kommuniziert; wobei sich eine innere Öffnung des Drahtlochs (142) in dem zweiten Linsentubus (14) an einem Außenrand der Anliegefläche (102) befindet.

7. Entfrostungslinse (1) nach Anspruch 1, welche ferner eine zweite Linse (60) aufweist, wobei eine Innenwand des zweiten Linsentubus (14) eine ringförmige Linsenanliegefläche (104) hat, wobei die Linsenanliegefläche (104) und die Anliegefläche (102) in einer axialen Richtung des zweiten Linsentubus (14) in Richtung der Öffnung (101) des ersten Linsentubus (12) in einer Reihenfolge angeordnet sind; wobei ein Umfangsrand einer bildseitigen Fläche der zweiten Linse (60) an die Linsenanliegefläche (104) anliegt.

## Revendications

1. Lentille de dégivrage (1), comprenant :
un barillet de lentille (10) ayant une ouverture (101) vers un côté d'objet, où une paroi intérieure du barillet de lentille (10) a une surface de butée (102) qui est annulaire ; le barillet de lentille (10) comprend un premier barillet de lentille (12) et un deuxième barillet de lentille (14) ; le premier barillet de lentille (12) a l'ouverture (101) ; le deuxième barillet de lentille (14) a la surface de butée (102) ; une extrémité du deuxième barillet de lentille (14) est disposée dans le premier barillet de lentille (12) ;
une première lentille (20) disposée dans le barillet de lentille (10) et située au niveau de l'ouverture (101), la première lentille (20) étant disposée entre l'ouverture (101) du premier barillet de lentille (12) et la surface de butée (102) du deuxième barillet de lentille (14) ; une surface côté image (201) de la première lentille (20) présentant une partie de butée (201a) ; et
un élément chauffant (30) adapté pour fournir une source de chaleur et disposé entre la surface de butée (102) du barillet de lentille (10) et la partie de butée (201a) de la première lentille (20), l'élément chauffant (30) étant disposé le long d'un bord périphérique de la première lentille (20) ; et
un élément thermoconducteur (50) disposé dans le barillet de lentille (10) et entourant la première lentille (20) et disposé entre une paroi intérieure du premier barillet de lentille (12) près de l'ouverture (101) et une ouverture d'extrémité du deuxième barillet de lentille (14).

2. Lentille de dégivrage (1) selon la revendication 1, comprenant en outre un élément d'isolation thermique (40) disposé dans le barillet de lentille (10), où l'élément chauffant (30) est situé entre l'élément d'isolation thermique (40) et la première lentille (20).

3. Lentille de dégivrage (1) selon la revendication 1, dans laquelle la paroi intérieure du premier barillet de lentille (12) présente une section filetée interne (121), et une paroi extérieure du deuxième barillet de lentille (14) présente une section filetée externe (141) correspondant à la section filetée interne (121) ; l'extrémité du deuxième barillet de lentille (14) est disposée dans le premier barillet de lentille (12) en vissant la section filetée externe (141) et la section filetée interne (121) du premier barillet de lentille (12).

4. Lentille de dégivrage (1) selon la revendication 1, dans laquelle l'élément thermoconducteur (50) est situé plus près d'une surface côté objet de la première lentille (20) que l'élément chauffant (30), et l'élément chauffant (30) est situé plus près de la surface côté image de la première lentille (20) que l'élément thermoconducteur (50).

5. Lentille de dégivrage (1) selon la revendication 4, dans laquelle l'élément thermoconducteur (50) est en contact avec le deuxième barillet de lentille (14).

6. Lentille de dégivrage (1) selon la revendication 1, dans laquelle le deuxième barillet de lentille (14) a un trou de fil (142) communiquant avec un intérieur du deuxième barillet de lentille (14) et un extérieur ; une ouverture intérieure du trou de fil (142) dans le deuxième barillet de lentille (14) est située sur un bord extérieur de la surface de butée (102).

7. Lentille de dégivrage (1) selon la revendication 1, comprenant en outre une deuxième lentille (60), dans laquelle une paroi intérieure du deuxième barillet de lentille (14) a une surface de butée de lentille (104) qui est annulaire, dans laquelle la surface de butée de lentille (104) et la surface de butée (102) sont disposées dans l'ordre le long d'une direction axiale du deuxième barillet de lentille (14) vers l'ouverture (101) du premier barillet de lentille (12) ; un bord périphérique d'une surface côté image de la deuxième lentille (60) vient en butée contre la surface de butée de lentille (104).
